(19) Europäisches Patentamt
European Patent Office
Office européen des brevets

(11) Veröffentlichungsnummer: **0 123 321**
**B1**

(12) # EUROPÄISCHE PATENTSCHRIFT

(45) Veröffentlichungstag der Patentschrift: **25.03.87**

(51) Int. Cl.⁴: **C 08 L 83/04**

(21) Anmeldenummer: **84104668.3**

(22) Anmeldetag: **26.04.84**

(54) **Verfahren zum Vernetzen von Organopolysiloxanmassen.**

(30) Priorität: **26.04.83 DE 3315060**

(43) Veröffentlichungstag der Anmeldung: **31.10.84 Patentblatt 84/44**

(45) Bekanntmachung des Hinweises auf die Patenterteilung: **25.03.87 Patentblatt 87/13**

(84) Benannte Vertragsstaaten: **BE DE FR GB IT NL**

(56) Entgegenhaltungen:
**US-A- 4 256 870**
**US-A- 4 337 332**

(73) Patentinhaber: **WACKER-CHEMIE GMBH**
**Prinzregentenstrasse 22**
**D-8000 München 22 (DE)**

(72) Erfinder: **Michel, Ulrich, Dr. Dipl.-Chem.**
**Marktler Strasse 76**
**D-8263 Burghausen (DE)**
Erfinder: **Radecker, Josef**
**Goethestrasse 9**
**D-8261 Emmerting (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Organopolysiloxanmassen, welche durch Anlagerung von Si-gebundenem Wasserstoff an Vinylgruppen vernetzbar sind, wobei diese Anlagerung durch einen Platinkatalysator gefördert wird und diese Massen einen eine Verzögerung der Vernetzung zumindest bei Raumtemperatur bewirkenden Zusatz enthalten, sind bereits bekannt. Zu derartigen Zusätzen gehören auch Maleinsäurediester (vgl. US 4 256 870, ausgegeben 17. März 1981, R. P. Eckberg, General Electric Company).

Es ist Aufgabe der Erfindung, ein Verfahren zum Vernetzen von Organopolysiloxanmassen durch Anlagerung von Si-gebundenem Wasserstoff an Vinylgruppen bereitzustellen, wobei diese Anlagerung durch einen Platinkatalysator gefördert wird und die Massen einen eine Verzögerung der Vernetzung bei Raumtemperatur bewirkenden Zusatz enthalten, der schwerer flüchtig und/oder in geringeren Mengen wirksam ist und/oder nach Aufhören bzw. Aufheben der die Vernetzung verzögernden Wirkung die Vernetzung rascher verlaufen läßt als die bisher bekannten vergleichbaren Zusätze. Diese Aufgabe wird durch die Erfindung gelöst.

Gegenstand der Erfindung ist ein Verfahren zum Vernetzen von Organopolysiloxanmassen durch Anlagerung von Si-gebundenem Wasserstoff an Vinylgruppen, wobei diese Anlagerung durch einen Platinkatalysator gefördert wird und die Massen mindestens ein Maleinsäurederivat als mindestens einen Teil von eine Verzögerung der Vernetzung bei Raumtemperatur bewirkendem Zusatz enthalten, dadurch gekennzeichnet, daß mindestens ein Teil des Maleinsäurederivats die Gruppierung

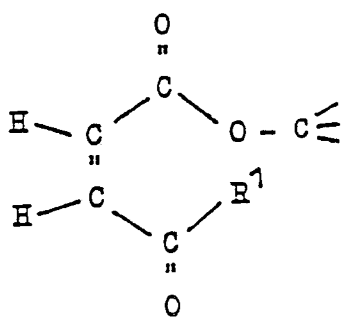

enthält, wobei $R^1$ eine Hydroxyl- oder Trimethylsiloxygruppe ist, oder daß mindestens ein Teil des Maleinsäurederivats ein Maleinimid ist.

Der Si-gebundene Wasserstoff kann bei dem erfindungsgemäßen Verfahren in den gleichen linearen, cyclischen oder verzweigten Verbindungen mit Si-gebundenem Wasserstoff vorliegen wie bei den bisher bekannten Verfahren zum Vernetzen von Organopolysiloxanmassen durch Anlagerung von Si-gebundenem Wasserstoff an Vinylgruppen. Es handelt sich bei diesen Verbindungen meist um solche aus Einheiten der allgemeinen Formel

$$R_m SiO_{\frac{4-m}{2}},$$

worin R Wasserstoff oder gleiche oder verschiedene, einwertige, gegebenenfalls substituierte Kohlenwasserstoffreste bedeutet, wobei mindestens 2, vorzugsweise mindestens 3 Si-gebundene Wasserstoffatome je Molekül dieser Verbindungen vorhanden sind und m 0, 1, 2 oder 3, vorzugsweise mindestens 1 ist, mit der weiteren Maßgabe, daß in diesen Einheiten durchschnittlich mindestens soviel organische Reste wie Si-gebundene Wasserstoffatome vorliegen.

Si-gebundener Wasserstoff liegt vorzugsweise in Mengen von 0,1 bis 15 Si-gebundenen Wasserstoffatomen je aliphatischer Mehrfachbindung vor.

Vorzugsweise haben die Verbindungen mit Si-gebundenem Wasserstoff, die bei dem erfindungsgemäßen Verfahren eingesetzt werden, eine Viskosität von 1 bis $10^4$ $mm^2 \cdot s^{-1}$ bei 25 °C, insbesondere von 5 bis $5 \cdot 10^3$ $mm^2 \cdot s^{-1}$ bei 25 °C.

Die Vinylgruppen können bei dem erfindungsgemäßen Verfahren in den gleichen linearen, cyclischen oder verzweigten Verbindungen vorliegen wie bei den bisher bekannten Verfahren zum Vernetzen von Organopolysiloxanmassen durch Anlagerung von Si-gebundenem Wasserstoff an Vinylgruppen. Es handelt sich bei diesen Verbindungen meist um Organopolysiloxane aus Einheiten der Formel

$$R^3_{m'} SiO_{\frac{4-m'}{2}},$$

worin $R^3$ gleiche oder verschiedene, einwertige, gegebenenfalls substituierte Kohlenwasserstoffreste bedeutet, wobei in jedem Molekül mindestens 2 der Reste $R^3$, vorzugsweise jedoch höchstens 50 % der Anzahl der Reste $R^3$ Vinylgruppen sind, und m' 0, 1, 2 oder 3, durchschnittlich 0,9 bis 2,1 ist.

Vorzugsweise haben die Organopolysiloxane mit Vinylgruppen eine Viskosität von 10 bis $10^6$ $mm^2 \cdot s^{-1}$ bei 25 °C, insbesondere von 50 bis $10^5$ $mm^2 \cdot s^{-1}$ bei 25 °C.

Vinylgruppen und Si-gebundener Wasserstoff können in verschiedenen Arten von Organosiliciumverbindungen oder in ein und derselben Art von Organosiliciumverbindungen, d. h. in verschiedenen Molekülen, oder in ein und derselben Art von Molekülen vorliegen.

Vorzugsweise enthalten die gegebenenfalls substituierten Kohlenwasserstoffreste R und $R^3$ jeweils 1 bis 18 Kohlenstoffatome je Rest. Beispiele für solche, von aliphatischen Mehrfachbindungen freie Kohlenwasserstoffreste R und $R^3$ sind Alkylreste, wie der Methyl-, Ethyl-, n-Propyl-, Isopropyl-, n-Butyl- und sec.-Butylrest sowie Octadecylreste ; Cycloalkylreste, wie der Cyclohexylrest und Methylcyclohexylreste, Arylreste, wie der Phenylrest ; Alkarylreste, wie Tolylreste und Aralkylreste, wie der Benzyl- und der beta-Phenylethylrest. Als Beispiele für substituierte, von aliphatischen Mehrfachbindungen freie Kohlenwasserstoffreste R und $R^3$ seien halogenierte Kohlenwasserstoffreste, wie der 3,3,3-Trifluorpropylrest und o-, p- und m-Chlorphenylreste sowie Cyanalkylreste, wie der beta-Cyanethylrest, genannt. Schon wegen der leichteren Zugänglichkeit sind jedoch vorzugsweise mindestens 60 % der Anzahl der nicht aus Si-gebundenem Wasserstoff bestehende Reste R und mindestens 60 % der von aliphatischen Mehrfachbindungen freien Reste $R^3$ Methylreste.

Als die Anlagerung von Si-gebundenem Wasserstoff an Vinylgruppen fördernde Platinkatalysatoren können bei dem erfindungsgemäßen Verfahren ebenfalls die gleichen Platinkatalysatoren verwendet werden wie sie auch bei den bisher bekannten Verfahren zum Vernetzen von Organopolysiloxanmassen durch Anlagerung von Si-gebundenem Wasserstoff an Vinylgruppen verwendet werden konnten. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6 \cdot 6H_2O$ und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin.

Der Platinkatalysator wird vorzugsweise in Mengen von 0,5 bis 500 Gewichts-ppm (Gewichtsteilen je Million Gewichtsteilen), insbesondere 2 bis 400 Gewichts-ppm, jeweils berechnet als elementares Platin und bezogen auf das Gesamtgewicht der in den Massen vorliegenden Organopolysiloxane, eingesetzt.

Bevorzugt als Maleinsäurederivate mit der Gruppierung der Formel

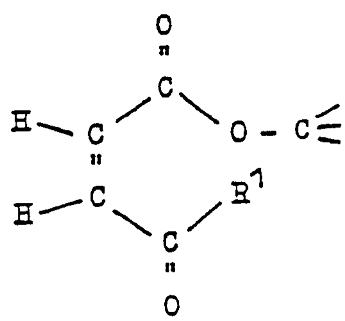

wobei $R^1$ die oben dafür angegebene Bedeutung hat, sind solche der Formel

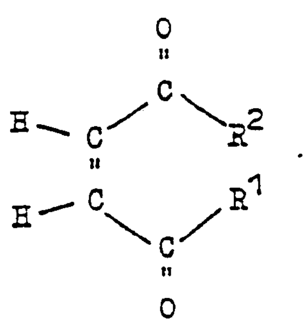

wobei $R^1$ die oben dafür angegebene Bedeutung hat und $R^2$ ein über Sauerstoff an das Kohlenstoffatom der

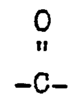

Gruppe gebundener, einwertiger Kohlenwasserstoffrest mit 1 bis 20 Kohlenstoffatomen ist.

Beispiele für Kohlenwasserstoffoxyreste $R^2$ sind der

Methoxy-
Ethoxy-
n-Propoxy-
Isopropoxy-
2-Ethylhexyloxy-
Allyloxy-
Cyclohexyloxy-
2-Methylbut-3-en-2-oxy-
Phenoxy- und der
Benzyloxyrest

sowie die verschiedenen Butoxy-, Hexyloxy- und Hexadecyloxyreste.

Einzelne Beispiele für Maleinsäurederivate der Formel

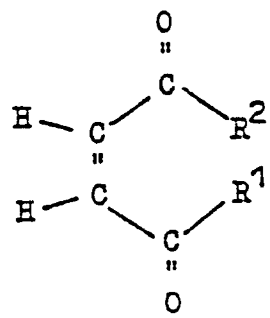

wobei $R^1$ eine Hydroxylgruppe ist und $R^2$ die oben dafür angegebene Bedeutung hat, also für Maleinsäurehalbester, sind

Maleinsäuremonomethylester
Maleinsäuremonoethylester
Maleinsäuremono-n-Propylester
Maleinsäuremonoisopropylester
die verschiedenen Maleinsäuremonobutylester
die verschiedenen Maleinsäuremonohexylester
Maleinsäuremono-2-ethylhexylester
Maleinsäuremonoallylester
Monophenoxymaleat
Maleinsäuremonobenzylester
Maleinsäuremonocyclohexylester
Maleinsäuremono-2-methylbut-3-en-2-yl-ester

und die verschiedenen Maleinsäuremonohexadecylester.

Derartige Maleinsäurehalbester sind im Handel erhältlich.

Einzelne Beispiele für Maleinsäurederivate der Formel

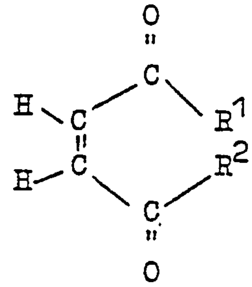

wobei $R^2$ ein über Sauerstoff an das Kohlenstoffatom der

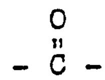

Gruppe gebundener Kohlenwasserstoffrest und $R^1$ eine Trimethylsiloxygruppe ist, sind solche der Formel

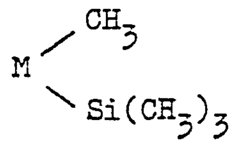

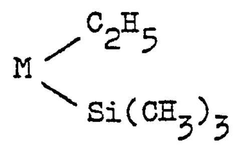

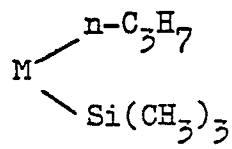

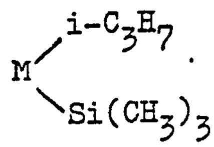

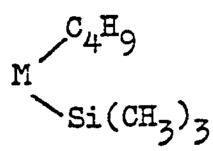

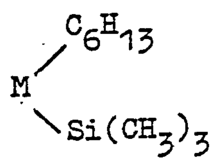

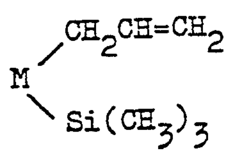

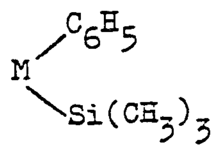

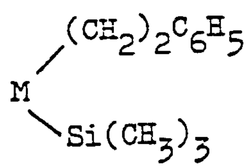

(Fortsetzung)

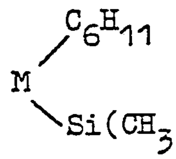

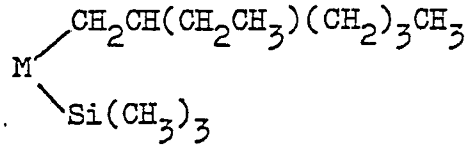

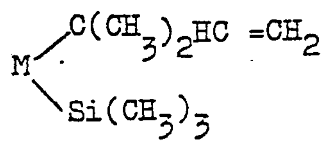

Bei allen diesen Formeln bedeutet M jeweils die Gruppierung

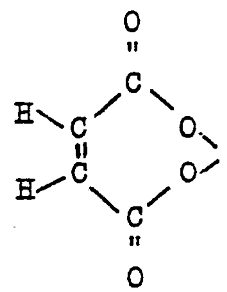

Die Herstellung derartiger Verbindungen kann in für den Ersatz des Wasserstoffatoms in einer Carboxylgruppe durch eine Trimethylsilylgruppe an sich bekannter Weise durch Umsetzung eines Maleinsäurehalbesters, z. B. Maleinsäuremonomethylester, mit Trimethylchlorsilan in Gegenwart eines säurebindenden Mittels, wie Triethylamin oder mit anderem Silylierungsmittel, wie Bistrimethylsilylharnstoff oder Trimethylsilylimidazol, erfolgen.

$R^2$ kann aber auch ein über Sauerstoff an das Kohlenstoffatom der

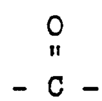

Gruppe in der Gruppierung

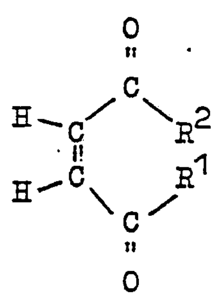

gebundener Kohlenwasserstoffrest sein, der durch mindestens eine Triorganosilylgruppe substituiert ist. Unter derartigen Resten $R^2$ sind solche der Formel

$$—O(CR_2^4)_nSiR_3^5$$

bevorzugt, wobei $R^4$ Wasserstoff oder gleiche oder verschiedene Alkylreste mit 1 bis 6 Kohlenstoffatomen je Rest, vorzugsweise Wasserstoff, $R^5$ gleiche oder verschiedene Alkylreste mit 1 bis 3 Kohlenstoffatomen je Rest bedeutet und n eine ganze Zahl im Wert von 3 bis 19 ist.

Ein Beispiel für ein erfindungsgemäß verwendbares Maleinsäurederivat mit einer Triorganosilylgruppe im Rest $R^2$ ist die Verbindung der Formel

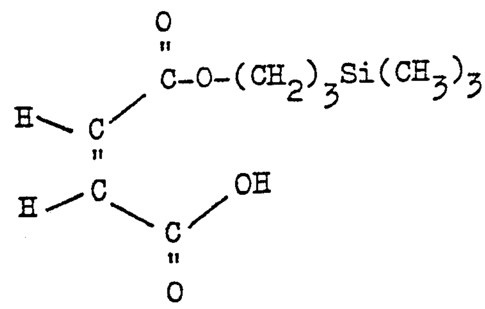

Schließlich sind als Maleinsäurederivate mit der Gruppierung

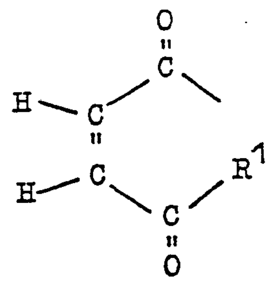

auch solche der Formel

$$R^6(SiR_2^7O)_x(SiR^7R^6O)_ySiR_2^7R^6$$

bevorzugt, wobei mindestens einer der Reste $R^6$ die Formel

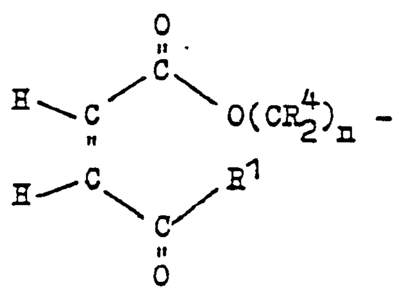

($R^1$, $R^4$ und n haben jeweils die oben dafür angegebene Bedeutung) hat, während die übrigen Reste $R^6$ solche der Formel

$$-O(CR_2^4)_nOH$$

sind ($R^4$ und n haben jeweils die oben dafür angegebene Bedeutung) oder die gleiche Bedeutung haben wie die Reste $R^7$, welche Alkylreste mit 1 bis 3 Kohlenstoffatomen je Rest oder Phenylreste sind, wobei sowohl die Alkyl- als auch die Phenylreste halogeniert sein können, und x 0 oder ein ganze Zahl im Wert von 1 bis 200, vorzugsweise jedoch nur bis 70, und y eine ganze Zahl im Wert von 1 bis 10, vorzugsweise 1 bis 8, ist.

Einzelne Beispiele für derartige, durch mindestens eine Gruppierung der Formel

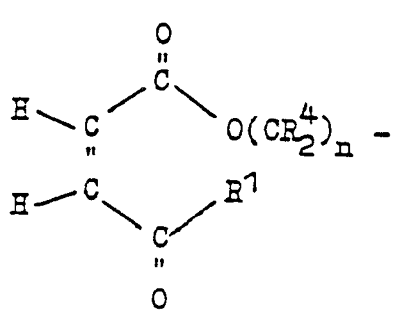

substituierte Organo(poly)siloxane sind solche der Formeln

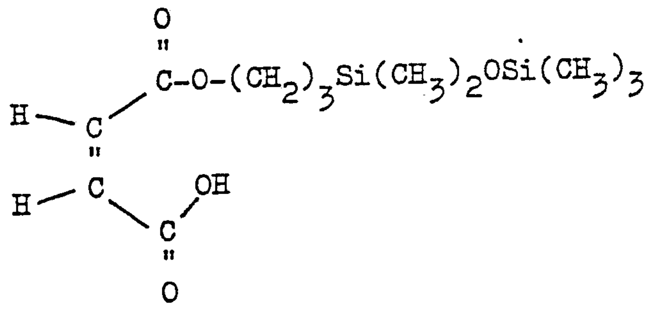

und

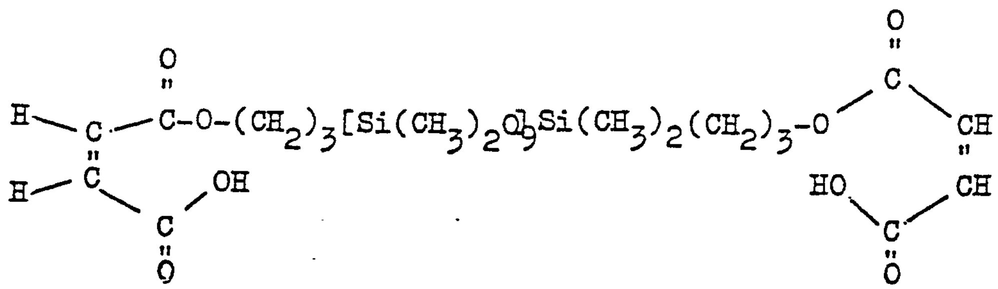

Die Herstellung von Maleinsäurederivaten mit einem über Sauerstoff an das Kohlenstoffatom einer

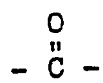

Gruppe gebundenen Kohlenwasserstoffrest, der durch eine Silylgruppe substituiert ist, und von Organo(poly)siloxanen der Formel

$$R^6(SiR^7_2O)_x(SiR^7R^6O)_ySiR^7_2R^6$$

kann beispielsweise in an sich bekannter Weise durch platinkatalysierte Anlagerung (Stufe 1) von Verbindungen der Formel

$$HSiR^5_3,$$

worin $R^5$ die oben dafür angegebene Bedeutung hat, bzw. der Formel

$$R^8(SiR^7_2O)_x(SiR^7R^8O)_ySiR^7_2R^8,$$

wobei $R^7$, x und y jeweils die oben angegebene Bedeutung haben und mindestens ein $R^8$ Wasserstoff ist, während die übrigen $R^8$ die gleiche Bedeutung wie $R^7$ haben, an Verbindungen der Formel

$$(CH_3)_3SiO(CR^4_2)_{n-2}CH=CH_2,$$

wobei $R^4$ und n jeweils die oben dafür angegebene Bedeutung haben, Abspaltung der an Kohlenstoff gebundenen Trimethylsiloxygruppe mittels Chlorwasserstoff (Stufe 2) und Umsetzung (Stufe 3) der so erhaltenen Produkte mit Maleinsäureanhydrid unter Bildung eines sauren Esters erfolgen. Die Stufe 3 wird vorzugsweise in Gegenwart eines Lösungsmittels, wie Toluol, Xylol oder halogeniertem Kohlenwasserstoff und bei 40 °C oder etwa 40 °C durchgeführt. Das Lösungsmittel wird nach Beendigung der Umsetzung abgedampft.

Die Maleinimide sind vorzugsweise solche der Formel

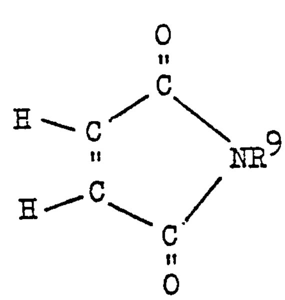

wobei $R^9$ Wasserstoff oder eine Hydroxylgruppe oder eine Trimethylsiloxygruppe oder ein Kohlenwasserstoffrest ist, der, wenn er eine Alkylgruppe ist, durch eine Hydroxyl- oder Trimethylsiloxygruppe, substituiert sein kann.

Die oben genannten Beispiele für Kohlenwasserstoffreste R und $R^3$ gelten auch für die Kohlenwasserstoffreste $R^9$. Ein weiteres Beispiel für einen Kohlenwasserstoffrest $R^9$ ist der Allylrest.

Einzelne Beispiele für Maleinsäureimide, die bei dem erfindungsgemäßen Verfahren eingesetzt werden können, sind

N-Allylmaleinimid
N-2-Hydroxyethylmaleinimid
N-Vinylmaleinimid
N-2-Trimethylsiloxyethylmaleinimid
N-Hydroxymethylmaleinimid.

Die Herstellung der vorstehend genannten Verbindungen ist in der Literatur beschrieben. Die Herstellung des bei dem erfindungsgemäßen Verfahren als weiteres Beispiel ebenfalls einsetzbaren N-Hydroxymaleinimids wird weiter unten beschrieben. Vorzugsweise wird bei dem erfindungsgemäßen Verfahren ein Maleinsäurederivat mit der Gruppierung

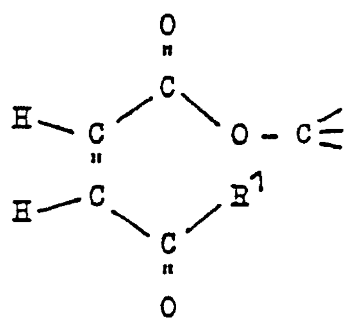

oder ein Maleinimid in Mengen von 0,001 bis 1 Gewichtsprozent, bezogen auf das Gesamtgewicht der in der jeweiligen Masse vorliegenden anderen Organosiliciumverbindungen, eingesetzt.

Zusätzlich zu Organosiliciumverbindung(en) mit Si-gebundenem Wasserstoff und Organosiliciumverbindung(en) mit Vinylgruppen bzw. Organosiliciumverbindung(en), die sowohl Sigebundenen Wasserstoff als auch Vinylgruppen enthalten, Platinkatalysator und Maleinsäurederivat können bei dem erfindungsgemäßen Verfahren Stoffe, die auch in den bisher bekannten Organopolysiloxanmassen, welche durch Anlagerung von Sigebundenem Wasserstoff vernetzbar sind, zusätzlich zu Anlagerungskatalysator, zu vernetzenden Siliciumverbindungen und Vernetzungsmittel vorliegen konnten, mitverwendet werden. Beispiele für solche zusätzlichen Stoffe sind Füllstoffe mit einer Oberfläche von mindestens 50 $m^2/g$, wie pyrogen erzeugtes Siliciumdioxyd oder gefälltes Siliciumdioxyd mit einer Oberfläche von mindestens 50 $m^2/g$, Füllstoffe mit einer Oberfläche von weniger als 50 $m^2/g$, wie Quarzmehl, Glasfasern, gefälltes Siliciumdioxyd mit einer Oberfläche von weniger als 50 $m^2/g$ oder Diatomeenerde, elektrisch leitfähig machende Stoffe, wie Acetylenruß, Pigmente, lösliche Farbstoffe, Weichmacher, rein-organische Harze, wie Polyvinylchloridpulver, Mittel zur Verbesserung der Haftung der aus den Massen durch deren Vernetzung erzeugten elastischen oder nicht elastischen Produkte auf den Unterlagen, auf denen diese Produkte erzeugt wurden, und andere die Vernetzung verzögernde Mittel als die erfindungsgemäß verwendeten Maleinsäurederivate.

Falls erwünscht, können alle oben genannten Füllstoffe hydrophobiert sein, indem sie z. B. mit Hexamethyldisilazan behandelt wurden.

Das erfindungsgemäße Verfahren wird vorzugsweise bei 20 °C bis 180 °C, insbesondere 60 °C bis 170 °C, durchgeführt.

Das erfindungsgemäße Verfahren kann für alle Zwecke eingesetzt werden, bei denen die Herstellung von vernetzten Organopolysiloxanen erwünscht ist. Das erfindungsgemäße Verfahren eignet sich somit z. B. zum Vergießen oder Einbetten beispielsweise von elektrischen oder elektronischen Bauelementen, zum Abdichten, zum Verkleben beispielsweise beim Verbinden von Glasplatten oder Platten aus durchsichtigem Kunststoff, zum Isolieren von elektrischen Leitern, für die Herstellung von Formkörpern, einschließlich Kabelendverschlüssen, zum Herstellen von klebrige Stoffe abweisenden Überzügen z. B. auf Papier und überhaupt ganz allgemein zum Beschichten von Unterlagen der verschiedensten Art, einschließlich Geweben aus organischen oder anorganischen Fasern.

Die im folgenden angegebenen Teile beziehen sich jeweils auf das Gewicht.

Die in einem Teil der folgenden Beispiele und dem Vergleichsversuch verwendete Mischung aus Platin-Vinylsiloxan-Komplex und Verdünnungsmittel wurde hergestellt wie folgt : Zu einer Mischung aus 10 Teilen $H_2PtCl_6 \cdot 6H_2O$, 20 Teilen 1,3-Divinyl-1,1,3,3-tetramethyldisiloxan und 50 Teilen Ethanol wurden

20 Teile Natriumbicarbonat gegeben. Das Gemisch wurde 30 Minuten zum Sieden unter Rückfluß erwärmt, dann 15 Stunden stehen gelassen und schließlich filtriert. Aus dem Filtrat wurden bei etwa 16 mbar (abs.) die flüchtigen Bestandteile abdestilliert. Als Rückstand wurden 17 Teile einer Flüssigkeit erhalten, die in Benzol gelöst wurde. Die Lösung wurde filtriert und aus dem Filtrat das Benzol abdestilliert. Der Rückstand wurde in Vinyldimethylsiloxygruppen als endständige Einheiten aufweisendem Dimethylpolysiloxan mit einer Viskosität von 1 000 $mm^2 \cdot s^{-1}$ bei 25 °C in solcher Menge gelöst, daß die Lösung 1 Gewichtsprozent Platin, berechnet als Element, enthält.

### Beispiel 1

100 Teile eines Gemisches, das durch Vermischen von 100 Teilen eines Vinyldimethylsiloxygruppen als endständige Einheiten aufweisenden Dimethylpolysiloxans mit einer Viskosität von 0,5 Pa · s bei 25 °C mit 40 Gewichts-ppm, bezogen auf das Gewicht der endgültigen Mischung, Platin in Form der Mischung aus Platin-Vinylsiloxan-Komplex und Verdünnungsmittel, deren Herstellung oben beschrieben wurde, und $33{,}882 \cdot 10^{-3}$ Teilen Maleinsäuremonoethylester und 24 Stunden bei 23,5 °C Lagern lassen bereitet wurde, werden mit 3 Teilen eines durch Trimethylsiloxygruppen endblockierten Mischpolymeren aus 33,33 Molprozent Dimethylsiloxan- und 66,66 Molprozent Methylhydrogensiloxaneinheiten mit einer Viskosität von 0,06 Pa · s bei 25 °C vermischt.

Die so erhaltene Organopolysiloxanmasse wird in einem offenen Gefäß bei 23,5 °C gehalten, bis sie eine Viskosität von 2 Pa · s erreicht hat. Die dafür erforderliche Zeit beträgt 5,75 Stunden.

### Beispiel 2

Die in Beispiel 1 beschriebene Arbeitsweise wird wiederholt mit der Abänderung, daß $36{,}704 \cdot 10^{-3}$ Teile Maleinsäuremonoallylester anstelle der $33{,}882 \cdot 10^{-3}$ Teile Maleinsäuremonoethylester verwendet werden. Die Zeit bis zum Erreichen der Viskosität von 2 Pa · s bei 23,5 °C beträgt 10 Stunden.

### Beispiel 3

Die in Beispiel 1 beschriebene Arbeitsweise wird wiederholt mit der Abänderung, daß $53{,}646 \cdot 10^{-3}$ Teile Maleinsäuremono-2-ethylhexylester anstelle der $33{,}882 \cdot 10^{-3}$ Teile Maleinsäuremonoethylester verwendet werden. Die Zeit bis zum Erreichen der Viskosität von 2 Pa · s bei 23,5 °C beträgt 4,8 Stunden.

Vergleichsversuch

Die in Beispiel 1 beschriebene Arbeitsweise wird wiederholt mit der Abänderung, daß zum Vergleich $46{,}116 \cdot 10^{-3}$ Teile Maleinsäurediallylester anstelle der $33{,}882 \cdot 10^{-3}$ Teile Maleinsäuremonoethylester verwendet werden. Die Zeit bis zum Erreichen der Viskosität von 2 Pa · s bei 23,5 °C beträgt 2,9 Stunden.

### Beispiel 4

Die in Beispiel 1 beschriebene Arbeitsweise wird wiederholt mit der Abänderung, daß $71{,}528 \cdot 10^{-3}$ Teile des Organosiloxans der Formel

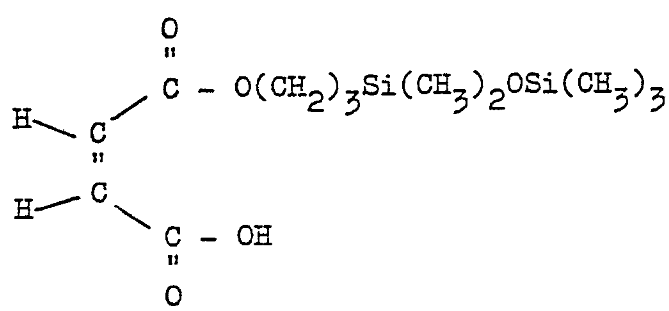

anstelle der $33{,}882 \cdot 10^{-3}$ Teile Maleinsäuremonoethylester verwendet werden. Die Zeit bis zum Erreichen der Viskosität bei 23,5 °C beträgt 14 Stunden.

Die Mischungen gemäß den Beispielen 1 bis 4 vernetzen bei 150 °C innerhalb von 10 Sekunden zu Elastomeren.

### Beispiel 5

100 Teile eines Vinyldimethylsiloxygruppen als endständige Einheiten aufweisenden Dimethylpolysiloxans mit einer Viskosität von 10 Pa · s bei 25 °C werden mit 20 Teilen pyrogen erzeugtem Siliciumdioxyd mit einer Oberfläche von 150 $m^2/g$, die durch darauf befindliche Trimethylsilyloxygruppen

hydrophobiert ist, 2 Teilen eines durch Trimethylsiloxygruppen endblockierten Mischpolymeren aus 50 Molprozent Dimethylsiloxan- und 50 Molprozent Methylhydrogensiloxaneinheiten mit einer Viskosität von 0,1 Pa · s bei 25 °C, 5 Gewichts-ppm, bezogen auf das Gewicht der endgültigen Mischung, Platin in Form von $H_2PtCl_6 \cdot 6H_2O$ und 0,06 Teilen N-2-Hydroxyethylmaleinimid vermischt.

Die so erhaltene Organopolysiloxanmasse ändert bei Raumtemperatur innerhalb von 6 Tagen ihre Viskosität nicht. Danach vernetzt sie bei 165 °C innerhalb von 5 Minuten zu einem Elastomeren mit einer Shore-A-Härte von 40.

## Beispiel 6

100 Teile eines Vinyldimethylsiloxygruppen als endständige Einheiten aufweisenden Mischpolymeren aus 99,8 Molprozent Dimethylsiloxan- und 0,2 Molprozent Vinylmethylsiloxaneinheiten mit einer Viskosität von $10^4$ Pa · s bei 25 °C werden mit 8 Teilen eines in den endständigen Einheiten je eine Si-gebundene Hydroxylgruppe aufweisenden Dimethylpolysiloxans mit einer Viskosität von 30 mPa · s bei 25 °C, 10 Teilen pyrogenen Siliciumdioxyds mit einer Oberfläche von 200 $m^2/g$, 30 Teilen Acetylenruß, 2,5 Teilen des durch Trimethylsiloxygruppen endblockierten Mischpolymeren aus 50 Molprozent Dimethylsiloxan- und 50 Molprozent Methylhydrogensiloxaneinheiten mit einer Viskosität von 0,1 Pa · s bei 25 °C, 10 Gewichts-ppm, bezogen auf das Gewicht der endgültigen Mischung, Platin in Form von $H_2PtCl_6 \cdot 6H_2O$ und 0,07 Teilen N-2-Hydroxyethylmaleinimid vermischt.

Die so erhaltene Organopolysiloxanmasse ist auch 5 Tage nach ihrer Bereitung noch plastisch. Danach vernetzt sie bei 150 °C innerhalb von 5 Minuten zu einem Elastomeren mit einer Shore-A-Härte von 70.

## Beispiel 7

Die in Beispiel 6 beschriebene Arbeitsweise wird wiederholt mit folgenden Abänderungen : Anstelle der 10 Teile pyrogenen Siliciumdioxyds mit einer Oberfläche von 200 $m^2/g$ werden 35 Teile pyrogenen Siliciumdioxyds der gleichen Art, anstelle der 10 Gewichts-ppm Platin in Form von $H_2PtCl_6 \cdot 6H_2O$ werden nur 5 Gewichts-ppm Platin in Form von $H_2PtCl_6 \cdot 6H_2O$ verwendet und es wird kein Acetylenruß mitverwendet.

Die so erhaltene Organopolysiloxanmasse ist auch 5 Tage nach ihrer Bereitung noch plastisch. Danach vernetzt sie bei 150 °C innerhalb von 5 Minuten zu einem Elastomeren mit einer Shore-A-Härte von 50.

## Beispiel 8

Die Arbeitsweise von Beispiel 5 wird wiederholt mit der Abänderung, daß anstelle der 0,06 Teile N-2-Hydroxyethylmaleinimid die gleiche molare Menge an N-Trimethylsilyloxymaleinimid verwendet wird. Es wird im wesentlichen das gleiche Ergebnis wie bei Beispiel 5 erhalten.

## Beispiel 9

Die Arbeitsweise von Beispiel 6 wird wiederholt mit der Abänderung, daß anstelle der 0,07 Teile N-2-Hydroxyethylmaleinimid die gleiche molare Menge an N-Hydroxymaleinimid verwendet wird. Es wird im wesentlichen das gleiche Ergebnis wie bei Beispiel 6 erhalten.

Das gemäß Beispiel 4 verwendete Maleinsäurederivat wurde nach folgender Vorschrift erhalten :

Stufe 1

Eine Lösung von 130 g Allyloxytrimethylsilan in 340 ml Toluol wird nach Vermischen mit 0,2 ml einer 0,1 gewichtsprozentigen Lösung von Dicyclopentadien-Platindichlorid in Methylenchlorid zum Sieden erwärmt. Während das Sieden aufrechterhalten wird, werden zu diesem Gemisch tropfenweise innerhalb 90 Minuten 148 g Pentamethyldisiloxan in 150 ml Toluol gegeben. Anschließend wird 3 Stunden zum Sieden unter Rückfluß erwärmt und nach Abkühlen des Gemisches auf Raumtemperatur dieses Gemisch mit Aktivkohle versetzt, um den Platinkatalysator zu adsorbieren. Nach Filtrieren und Entfernen des Lösungsmittels in einem Rotationsverdampfer werden 190 g der Verbindung der Formel

$$(CH_3)_3SiO(CH_2)_3Si(CH_3)_2OSi(CH_3)_3$$

erhalten.

Stufe 2

Eine Lösung der 190 g der in Stufe 1 erhaltenen Verbindung in 350 ml Methanol wird mit 3 ml konzentrierter Salzsäure vermischt und eine Stunde bei Raumtemperatur gerührt. Das so erhaltene

Gemisch wird mit 1,6 g Natriumcarbonat vermischt und eine Stunde gerührt.

Nach dem Abdestillieren des Methanols und Abfiltrieren vom ausgefallenen Salz werden 120 g der Verbindung der Formel

$$HO(CH_2)_3Si(CH_3)_2OSi(CH_3)_3$$

erhalten.

Stufe 3

94 g der in Stufe 2 erhaltenen Verbindung und 45 g Maleinsäureanhydrid werden in 500 ml Toluol 72 Stunden bei 40 °C gerührt. Nach dem Abdestillieren des Toluols werden 135 g einer leicht gelblichen Flüssigkeit erhalten, die gemäß $^1$H-NMR-Spektroskopie die in Beispiel 4 angegebene Formel hat.

Das gemäß Beispiel 8 verwendete N-Trimethylsilyloxymaleinimid wurde nach folgender Vorschrift erhalten :

Stufe a

18,1 g Verbindung der Formel

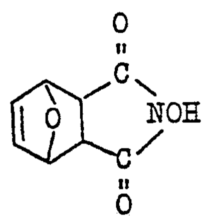

(Bull. Soc. Chem. Jap. 44, *1971*, Seite 1084-1089, Mitsuaki Narita et al.) und 12,3 g Bistrimethylsilylharnstoff in 200 ml Methylenchlorid werden 12 Stunden bei Raumtemperatur gerührt. Nach dem Filtrieren wird das Lösungsmittel in einem Rotationsverdampfer entfernt. Es werden 25 g der Verbindung der vorstehend angegebenen Formel, wobei jedoch der über Sauerstoff an Stickstoff gebundene Wasserstoff durch eine Trimethylsilylgruppe ersetzt ist, erhalten. Diese Struktur ist durch $^1$H-NMR-Spektroskopie gesichert.

Stufe b

20 g der in Stufe a erhaltenen Verbindung werden in einer Destillationsvorrichtung langsam auf 160 °C erwärmt. Dabei wird stürmisch Furan entwickelt. Nachdem kein Furan mehr entwickelt wird, wird der Rückstand bei 130 Pa (abs.) destilliert. Bei 100 °C geht eine leicht gelbliche Flüssigkeit über, die sofort kristallisiert (Fp. 117 °C) und gemäß $^1$H-NMR-Spektroskopie N-Trimethylsilyloxymaleinimid ist.

Das gemäß Beispiel 9 verwendete N-Hydroxymaleinimid wurde nach folgender Vorschrift erhalten :

3 g der in Stufe b (vgl. oben) erhaltenen Verbindung in 10 ml Wasser werden 15 Minuten bei Raumtemperatur gerührt. Nach dem Entfernen des Wassers in einem Rotationsverdampfer werden 1,8 g N-Hydroxymaleinimid vom Fp. 141 °C erhalten.

**Patentansprüche**

1. Verfahren zum Vernetzen von Organopolysiloxanmassen durch Anlagerung von Si-gebundenem Wasserstoff an Vinylgruppen, wobei diese Anlagerung durch einen Platinkatalysator gefördert wird und die Massen mindestens ein Maleinsäurederivat als mindestens einen Teil von eine Verzögerung der Vernetzung bei Raumtemperatur bewirkenden Zusatz enthalten, dadurch gekennzeichnet, daß mindestens ein Teil des Maleinsäurederivats die Gruppierung

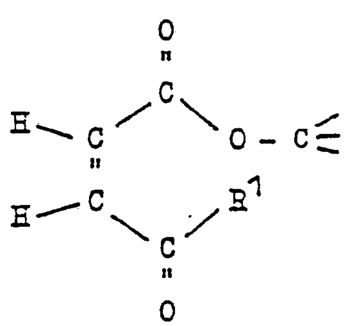

enthält, wobei $R^1$ eine Hydroxyl- oder Trimethylsiloxygruppe ist, oder daß mindestens ein Teil des Maleinsäurederivats ein Maleinimid ist.

2. Verfahren nach Anspruch 1, dadurch gekennzeichnet, daß als Maleinsäurederivat ein solches der Formel

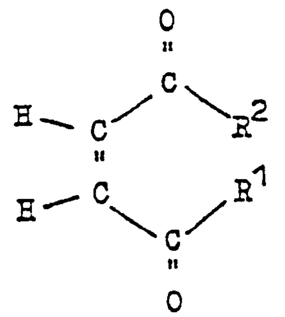

verwendet wird, wobei $R^1$ die in Anspruch 1 dafür angegebene Bedeutung hat und $R^2$ ein über Sauerstoff an das Kohlenstoffatom der

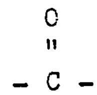

Gruppe gebundener, einwertiger Kohlenwasserstoffrest mit 1 bis 20 Kohlenstoffatomen ist.

3. Verfahren nach Anspruch 1, dadurch gekennzeichnet, daß als Maleinsäurederivat ein solches der in Anspruch 2 angegebenen Formel verwendet wird, wobei jedoch $R^2$ ein über Sauerstoff an das Kohlenstoffatom der

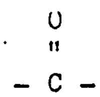

Gruppe gebundener Kohlenwasserstoffrest ist, der durch mindestens eine Triorganosilylgruppe substituiert ist.

4. Verfahren nach Anspruch 3, dadurch gekennzeichnet, daß $R^2$ ein Rest der Formel

$$—O(CR_2^4)_nSiR_3^5$$

ist, wobei $R^4$ Wasserstoff oder gleiche oder verschiedene Alkylreste mit 1 bis 6 Kohlenstoffatomen je Rest bedeutet und $R^5$ gleiche oder verschiedene Alkylreste mit 1 bis 3 Kohlenstoffatomen je Rest und n eine ganze Zahl im Wert von 3 bis 19 bedeutet.

5. Verfahren nach Anspruch 1, dadurch gekennzeichnet, daß als Maleinsäurederivate solche der Formel

$$R^6(SiR_2^7O)_x(SiR^7R^6O)_ySiR_2^7R^6$$

verwendet werden, wobei mindestens einer der Reste $R^6$ die Formel

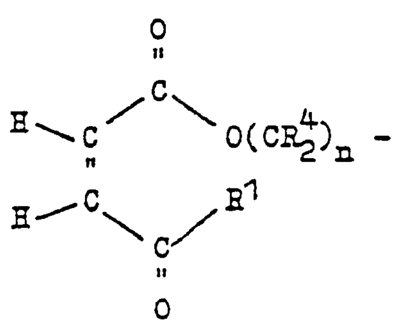

($R^1$, $R^4$ und n haben jeweils die in Anspruch 1 bzw. Anspruch 4 dafür angegebene Bedeutung) hat, während die übrigen Reste $R^6$ solche der Formel

$$—O(CR_2^4)_nOH$$

sind ($R^4$ und n haben jeweils die in Anspruch 4 dafür angegebene Bedeutung) oder die gleiche Bedeutung haben wie die Reste $R^7$, welche Alkylreste mit 1 bis 3 Kohlenstoffatomen je Rest oder Phenylreste sind, wobei sowohl die Alkylreste als auch die Phenylreste halogeniert sein können und x 0 oder eine ganze Zahl im Wert von 1 bis 200 und y eine ganze Zahl im Wert von 1 bis 10 ist.

6. Verfahren nach Anspruch 1 bis 5, dadurch gekennzeichnet, daß ein Maleinsäurederivat mit der Gruppierung der in Anspruch 1 angegebenen Formel oder ein Maleinimid in Mengen von 0,001 bis 1 Gewichtsprozent, bezogen auf das Gesamtgewicht der in der jeweiligen Masse vorliegenden anderen Organosiliciumverbindungen verwendet wird.

**Claims**

1. Process for cross-linking organopolysiloxane compositions by the addition of Si-bonded hydrogen to vinyl groups, this addition being assisted by a platinum catalyst and the compositions containing at least one maleic acid derivative as at least one portion of an additive causing retardation of the cross-linking at room temperature, characterised in that at least a portion of the maleic acid derivative contains the grouping

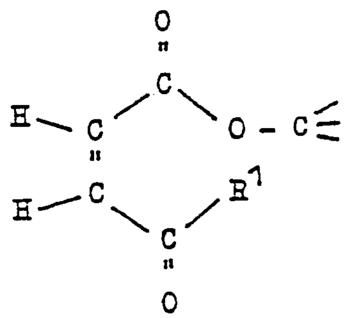

wherein $R^1$ is a hydroxy or trimethylsiloxy group, or at least a portion of the maleic acid derivative is a maleimide.

2. Process according to claim 1, characterised in that there is used as the maleic acid derivative a derivative of the formula

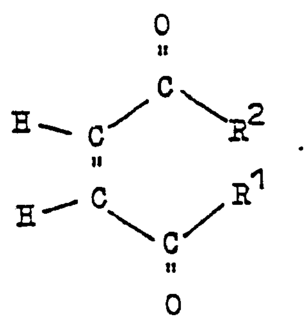

wherein $R^1$ has the meaning given in claim 1 and $R^2$ is a monovalent hydrocarbon radical having from 1 to 20 carbon atoms that is bonded *via* oxygen to the carbon atom of the

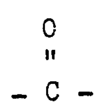

group.

3. Process according to claim 1, characterised in that there is used as the maleic acid derivative a derivative having the formula given in claim 2, but wherein $R^2$ is a hydrocarbon radical that is bonded *via* oxygen to the carbon atom of the

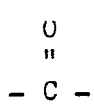

group, which hydrocarbon radical is substituted by at least one triorganosilyl group.

4. Process according to claim 3, characterised in that $R^2$ is a radical of the formula

$$-O(CR_2^4)_nSiR_3^5$$

wherein $R^4$ represents hydrogen or identical or different alkyl radicals having from 1 to 6 carbon atoms per radical and $R^5$ represents identical or different alkyl radicals having from 1 to 3 carbon atoms per radical and n represents an integer having a value of from 3 to 19.

5. Process according to claim 1, characterised in that as maleic acid derivatives there are used derivatives of the formula

$$R^6(SiR_2^7O)_x(SiR^7R^6O)_ySiR_2^7R^6$$

wherein at least one of the radicals $R^6$ has the formula

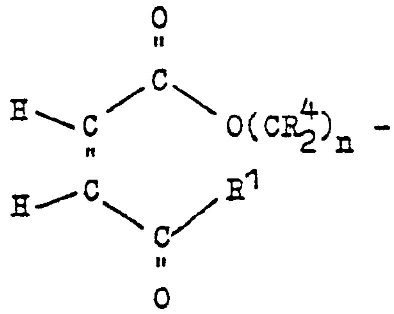

($R^1$, $R^4$ and n each have the meanings given in claim 1 or claim 4), while the remaining radicals $R^6$ are those of the formula

$$-O(CR_2^4)_nOH$$

($R^4$ and n each have the meanings given in claim 4) or have the same meaning as the radicals $R^7$, which are alkyl radicals having from 1 to 3 carbon atoms per radical or phenyl radicals, it being possible for both the alkyl radicals and the phenyl radicals to be halogenated, and x is 0 or an integer having a value of from 1 to 200 and y is an integer having a value of from 1 to 10.

6. Process according to any one of claims 1 to 5, characterised in that a maleic acid derivative containing the grouping of the formula given in claim 1 or a maleimide is used in amounts of from 0.001 to 1 per cent by weight, calculated on the total weight of the other organosilicon compounds in the particular composition.

**Revendications**

1. Procédé pour réticuler des matières à base de polyorganosiloxanes, par fixation d'hydrogène, relié à du Si, sur des groupes silyles, cette fixation étant accélérée par un catalyseur au platine et les matières contenant au moins un dérivé de l'acide maléique constituant au moins une partie d'un additif ayant pour rôle de ralentir la réticulation à la température ambiante, procédé caractérisé en ce qu'au moins une partie du dérivé de l'acide maléique comporte le groupement :

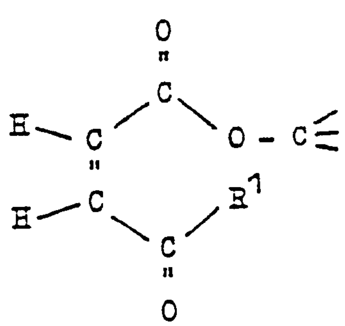

$R^1$ représentant un groupe hydroxyle ou triméthylsiloxy, ou en ce qu'au moins une partie du dérivé de l'acide maléique est un maléinimide.

2. Procédé selon la revendication 1, caractérisé en ce qu'on utilise comme dérivé de l'acide maléique un dérivé de formule :

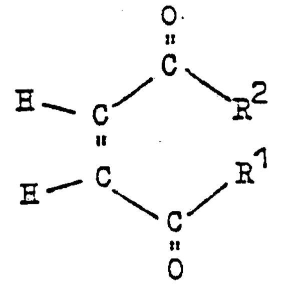

dans laquelle $R^1$ a le sens indiqué à la revendication 1 et $R^2$ représente un reste d'hydrocarbure monovalent, comportant 1 à 20 atomes de carbone et qui est relié par l'intermédiaire d'un atome d'oxygène à l'atome de carbone du groupe

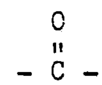

3. Procédé selon la revendication 1, caractérisé en ce qu'on utilise comme dérivé de l'acide maléique un dérivé ayant la formule indiquée à la revendication 2, mais dans laquelle $R^2$ représente un reste d'hydrocarbure, relié par l'intermédiaire d'un atome d'oxygène à l'atome de carbone du groupe

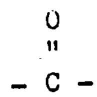

reste d'hydrocarbure qui est substitué par au moins un groupe triorganosilyle.

4. Procédé selon la revendication 3, caractérisé en ce que $R^2$ représente un reste de formule :

$$—O(CR_2^4)_nSiR_3^5$$

dans laquelle les symboles $R^4$ représentent des atomes d'hydrogène ou des restes alkyles, identiques ou différents, comportant chacun 1 à 6 atomes de carbone, et les symboles $R^5$ représentent des restes alkyles, identiques ou différents, comportant chacun 1 à 3 atomes de carbone, et n est un nombre entier valant 3 à 19.

5. Procédé selon la revendication 1, caractérisé en ce qu'on utilise comme dérivé de l'acide maléique ceux de formule :

$$R^6(SiR_2^7O)_x(SiR^7R^6O)_ySiR_2^7R^6$$

l'un au moins des restes $R^6$ répondant à la formule :

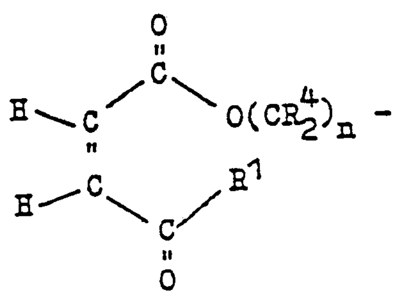

($R^1$, $R^4$ et n ayant chacun le sens indiqué à la revendication 1 ou à la revendication 4), cependant que les autres restes $R^6$ sont des restes de formule :

$$—O(CR_2^4)_nOH$$

($R^4$ et n ayant chacun le sens indiqué à la revendication 4) ou ont le même sens que pour les restes $R^7$, qui sont des restes alkyles ayant 1 à 3 atomes de carbone par reste ou des restes phényles, les restes alkyles aussi bien que les restes phényles pouvant être halogénés, et x est nul ou représente un nombre entier valant 1 à 200 et y est un nombre entier valant 1 à 10.

6. Procédé selon l'une des revendications 1 à 5, caractérisé en ce qu'on utilise un dérivé de l'acide maléique comportant le groupement ayant la formule indiquée à la revendication 1 ou un maléinimide, en des quantités de 0,001 à 1 % en poids, sur la base du poids total des autres composés d'organosilicium présents dans les matières en cause.